**Europäisches Patentamt**

**European Patent Office**

**Office européen des brevets**

(19)

(11) Veröffentlichungsnummer: **0 053 199
B1**

(12) # EUROPÄISCHE PATENTSCHRIFT

(45) Veröffentlichungstag der Patentschrift:
**29.08.84**

(51) Int. Cl.³: **G 01 B 9/02**

(21) Anmeldenummer: **80107507.8**

(22) Anmeldetag: **02.12.80**

(54) Verfahren zum schrittweisen Messen von geometrischen Grössen und Vorrichtungen zur Durchführung des Verfahrens.

(43) Veröffentlichungstag der Anmeldung:
**09.06.82 Patentblatt 82/23**

(45) Bekanntmachung des Hinweises auf die Patenterteilung:
**29.08.84 Patentblatt 84/35**

(84) Benannte Vertragsstaaten:
**AT CH DE FR GB IT LI NL SE**

(56) Entgegenhaltungen:
**DE - A - 1 473 812
DE - A - 2 549 082
DE - B - 1 255 931
FR - A - 2 124 998
US - A - 3 661 463**

(73) Patentinhaber: **Dr. Johannes Heidenhain GmbH,
Nansenstrasse 17, D-8225 Traunreut (DE)**

(72) Erfinder: **Metz, Gerald, Ing.grad, Reichlberg 13b,
D-8221 Matzing (DE)**

**Beschreibung**

Die Erfindung bezieht sich auf ein Verfahren zum schrittweisen optischen Messen von geometrischen Größen, die sich durch Längenmessungen ermitteln lassen, sowie auf Vorrichtungen zur Durchführung des Verfahrens.

Strecken, die länger sind als die zur Verfügung stehenden Meßnormale, lassen sich bekanntlich durch Aneinanderfügen mehrerer Teilmessungen ermitteln (»Laserinterferometer«, Sonderdruck aus der »Siemens-Zeitschrift« 44 (1970), Beiheft »Numerische Steuerungen«, Seite 5). Dabei sind die Anschlußfehler nicht vernachlässigbar klein. Messungen, die auf dem fortlaufenden Aufaddieren von Zählinkrementen beruhen — wie etwa das inkrementale Meßverfahren — sind besonders fehlerbehaftet, wenn die Meßteilung kürzer ist, als die zu messende Strecke. Bei derartigen Meßverfahren bildet im allgemeinen der Beginn der Meßteilung die Meßbasis, die den Anfangspunkt der Meßstrecke festlegt. Eine Ableseeinrichtung ist relativ zur Meßteilung beweglich und liest die Meßteilung ab. Die Anzahl der gezählten Inkremente wird aufsummiert. Ist die zu ermittelnde Strecke größer als die Länge der Meßteilung, muß am Ende der Meßteilung der gezählte Wert gespeichert werden und der Anfangspunkt der Meßteilung muß bei der zweiten Teilmessung dort angeordnet werden, wo die erste Teilmessung beendet wurde. Dieses Anschließen des Teilungsnullpunktes exakt an den Endpunkt der vorangegangenen Teilmessung — also die Verschiebung der Meßbasis — ist im allgemeinen sehr schwierig und führt leicht zu Fehlern. Diese Fehler sind nicht mehr vernachlässigbar, wenn die Meßunsicherheit nur μm oder Bruchteile davon betragen soll.

Aus der FR-A-2 124 998 ist ein Laserinterferometer bekannt, bei dem die Meßbasis oder der Meßwertgeber verschiebbar angeordnet sind.

Aus der US-A-3 661 463 und der DE-B-1 255 931 sind Interferometermeßeinrichtungen bekannt, bei denen der Strahlenverlauf zumindest teilweise in längenveränderlichen und gegebenenfalls evakuierten Hohlräumen verläuft.

Schließlich ist aus der DE-A-2 549 082 ein interferometrisch arbeitendes Meßsystem bekannt, bei dem das Interferometerfernrohr pendelnd aufgehängt ist.

All diese Einrichtungen vermeiden jedoch nicht den eingangs geschilderten Nachteil bei der schrittweisen Messung von geometrischen Größen.

Es ist die Aufgabe der Erfindung, die angegebenen Nachteile zu vermeiden und ein Meßverfahren zu schaffen, das die schrittweise Messung von Strecken ermöglicht, ohne daß die Anschlußfehler der Teilmessungen größer werden, als durch die Auflösung der Meßeinrichtung gegeben ist.

Diese Aufgabe wird durch ein Verfahren gelöst, dessen Verfahrensschritte im kennzeichnenden Teil des Anspruchs 1 angegeben sind.

Die Vorteile der Erfindung liegen im wesentlichen darin, daß die Gesamtmessung genauer wird als bei den bekannten Verfahren, und daß die Messung reproduzierbar wird.

Durch das Betreiben des erfindungsgemäßen Verfahrens mit Einrichtungen gemäß den Unteransprüchen ergeben sich weitere Vorteile, da sich die schädlichen Umgebungseinflüsse nicht auf die Messung auswirken.

Anhand der Zeichnung soll die Erfindung noch näher erläutert werden. Es zeigt

Fig. 1 eine schematische Darstellung einer Laser-Interferometermeßeinrichtung gemäß dem Stand der Technik,

Fig. 2 eine schematische Darstellung einer Laser-Interferometermeßeinrichtung zur Durchführung des erfindungsgemäßen Verfahrens,

Fig. 3a bis 3c eine schematische Darstellung der Meßschritte,

Fig. 4 eine variierte Einzelheit der Meßeinrichtung gemäß Fig. 2,

Fig. 5 eine schematische Darstellung einer Anordnung zum Messen kleiner Winkel,

Fig. 6 eine schematische Darstellung einer Anordnung zum Messen von Ungeradheiten.

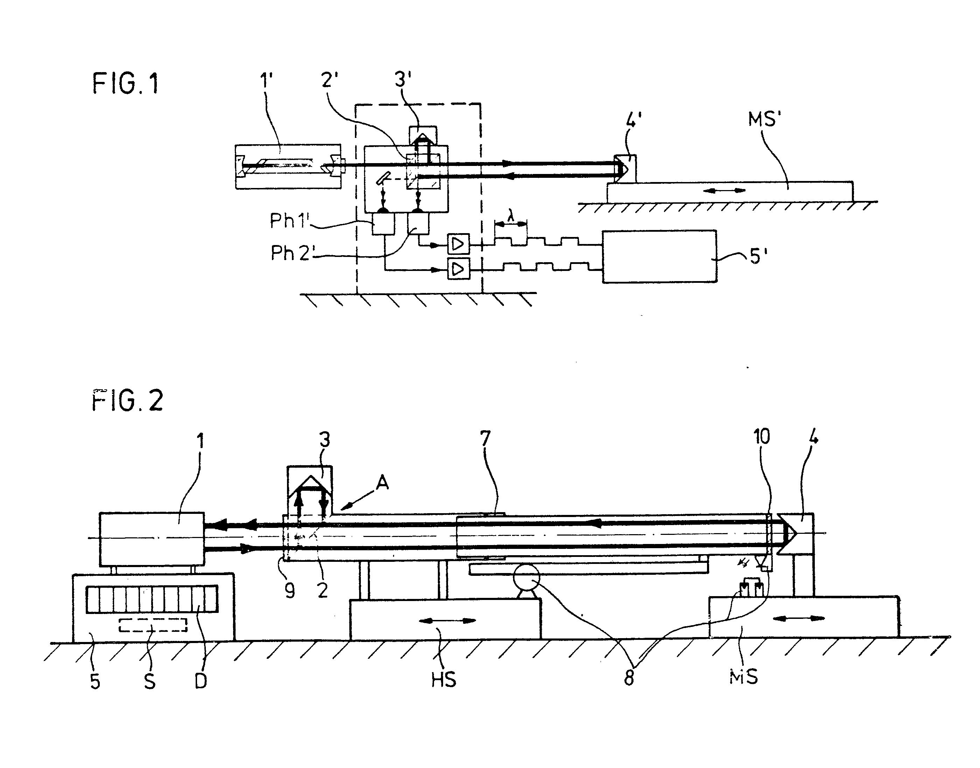

Die bekannten Laser-Interferometermeßeinrichtungen arbeiten im Prinzip so, wie in Fig. 1 dargestellt ist. Interferometrische Längenmessungen beruhen auf dem Vergleich der zu messenden Länge mit der Lichtwellenlänge $\lambda$. Das kohärente Wellenfeld einer Lichtquelle (Laser 1') wird durch Spiegel, Prismen, Blenden oder ähnliches geteilt; die beiden Wellenfelder durchlaufen dann zwei verschiedene Strecken, eine feste Vergleichsstrecke und die veränderliche Meßstrecke, und werden danach an einer bestimmten Stelle überlagert. Je nach der gegenseitigen Phasenbeziehung der Lichtwellen (Gangunterschied) herrscht am Ort der Überlagerung Helligkeit oder Dunkelheit. Zur laserinterferometrischen Längenmessung wird im allgemeinen eine abgewandelte Form des Michelson-Interferometers, das zur Strahlenteilung eine teildurchlässig verspiegelte Fläche einer Teilerplatte oder eines Teilerprismas benutzt, verwendet.

Bei der in Fig. 1 dargestellten Anordnung wird der Laserstrahl durch ein Teilerprisma 2' in zwei Strahlen aufgeteilt, von denen der eine eine feststehende Strecke zum Tripelprisma 3' und zurück und der andere die veränderliche Strecke zum Tripelprisma 4' und zurück durchläuft. Die beiden Strahlen werden am Teilerprisma 2' wieder vereinigt und die Interferenzerscheinungen mit Hilfe des Photodetektors PH 2' ausgewertet. Beim Verschieben des Tripelprismas 4' um einen Weg $i \cdot \lambda$ wechselt die Helligkeit bzw. die Dunkelheit am Photodetektor wegen der Verdoppelung des Gangunterschiedes durch den Hin- und Rückweg der Lichtwelle 2i-mal. Ein Streifendurchgang entspricht also einer Spiegelverschiebung um die halbe Lichtwellenlänge im betreffenden Medium. Die Anzahl der Hell-Dunkel-Hell-Zyklen kann mit einem elektronischen Zähler 5' erfaßt werden.

Ein Interferometer stellt gewissermaßen ein inkrementales Linearmeßsystem mit $\lambda/2$-(manchmal $\lambda/4$-)Intervallen dar. Um bei einem solchen System die Verschiebungsrichtung erkennen zu können, ist ein zweites, gegenüber dem ersten um $\pi/2$ phasenversetztes Signal erforderlich. Dieses Signal liefert ein im Interferometer abgeteilter, durch geeignete optische Hilfsmittel (z. B. Durchgang durch eine $\lambda/4$ Phasenplatte) um $\lambda/4$ phasenverschobener Teilstrahl, auf dem Photodetektor Ph 1'. Mit Hilfe eines elektronischen Richtungsdiskriminators läßt sich aus den beiden um $\pi/2$ versetzten Signalen die Verschiebungsrichtung des Spiegels 4' bestimmen.

Damit Führungsfehler des Meßschlittens MS' nicht zu Meßfehlern Anlaß geben, ist es notwendig, Reflektoren zu benutzen, die kippungsunabhängig sind. Dazu gehören z. B. Tripelspiegel und Tripelprismen (Würfeleckprismen), die einfallende Strahlen unabhängig von der Lage des Spiegels bzw. des Prismas stets parallel zu sich selbst reflektieren. Längere Strecken lassen sich durch Aneinanderfügen mehrerer Teilmessungen ermitteln, wobei es zu den eingangs erwähnten Anschlußfehlern kommen kann.

Das erfindungsgemäße Meßverfahren läßt sich besonders gut mit einer Laser-Interferometermeßeinrichtung gemäß Fig. 2 durchführen. Die in Fig. 2 dargestellte Einrichtung hat zudem noch den Vorteil, daß Einflüsse, die den Brechungsindex des vom Laserstrahl durchlaufenen Mediums verändern könnten, nicht zur Wirkung gelangen, da sich bei den einzelnen Teilmessungen die Meßstrecke im wesentlichen im Vakuum befindet.

Es sind verschiedene Möglichkeiten bekannt, die Einflüsse der Umgebung auf den Brechungsindex des vom Meßstrahl durchlaufenen Mediums zu eliminieren. In der eingangs zitierten Literaturstelle werden durch einen Rechner die Meßdaten mit Korrekturwerten multipliziert. Dazu sind an der gesamten Meßstrecke Meßwertaufnehmer vorgesehen, die die Umgebungsverhältnisse des durchlaufenen Mediums ermitteln und an den Rechner weiterleiten, der daraus die Korrekturwerte ermittelt und den Meßwerten zuschlägt.

Eine weitere Möglichkeit der Eliminierung der Umgebungseinflüsse auf den Brechungsindex des durchlaufenen Mediums besteht in der Abkapselung der Meßstrecke. Vorschläge zu derartigen Lösungen finden sich außerdem beispielsweise in der DE-A-1 698 010.

Alle diese Lösungen sind jedoch nicht brauchbar, wenn eine längere Strecke gemessen werden soll, als die maximale Auszugslänge jener Abkapseleinrichtungen.

Bei dem Laser-Interferometer in Fig. 2 ist der Laser 1 wie üblich ortsfest angebracht. Die Meßbasis A wird von dem Interferometer mit den Elementen teildurchlässiger Spiegel 2, Tripelprisma 3 und einem evakuierten, längenveränderlichen Rohr 7 gebildet. Die Elemente (Photodetektoren o. dgl.) zum ermitteln der Streifendurchgänge sind nicht mehr gezeigt, da sie in Fig. 1 bereits erläutert sind und bekanntermaßen zu jeder derartigen Meßeinrichtung gehören. Lichtsender und Empfänger sind in einem Gehäuse des Lasers 1 untergebracht. Im Gegensatz zum Stand der Technik ist die Meßbasis A jedoch nicht ortsfest angeordnet, sondern entlang der Meßstrecke mittels eines Hilfsschlittens HS verschiebbar. Auf einem Meßschlitten MS ist ein weiteres Tripelprisma 4 als Reflektor angeordnet, dessen Verschiebung in bezug auf die Meßbasis A interferometrisch gemessen werden soll. Der Meßschlitten MS kann beispielsweise der Werkzeugschlitten einer Bearbeitungsmaschine sein, die vermessen werden soll. Über eine Servo-Nachführregeleinrichtung 8 läßt sich die Auszugslänge des evakuierten Rohres 7 bestimmen. Die Länge des Auszuges wird von der Stellung des Meßschlittens MS also des Reflektors 4 bestimmt. Das Rohr ist mit strahlendurchlässigen Gläsern 9, 10 an den Stirnflächen verschlossen und evakuiert. Die Rohrlänge wird von der Servo-Nachführregeleinrichtung 8 so eingestellt, daß sich zwischen dem einen Rohrende 10 und dem Reflektor 4 ein möglichst kleiner Luftspalt ergibt. Die verbleibende Luftstrecke ist so kurz, daß die Messung davon nur so gering beeinflußt wird, daß dieser Fehler vernachlässigbar ist.

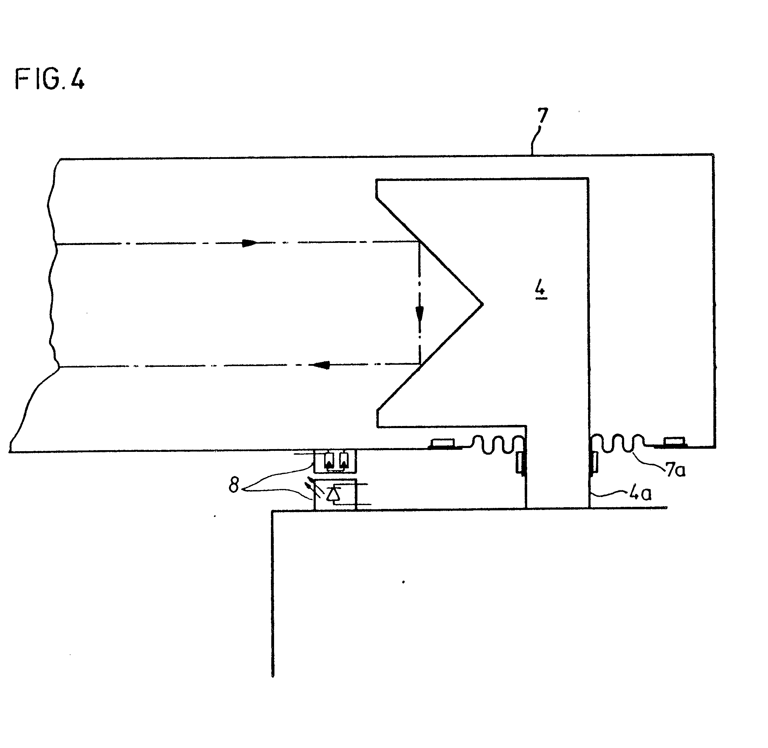

Soll auch dieser Fehler noch vermieden werden, kann der Reflektor 4 wie in Fig. 4 dargestellt ist, innerhalb des evakuierten Rohres 7 angeordnet sein. Eine elastische Dichtung 7a dichtet das Rohr 7 am Schaft 4a des Reflektors 4 ab.

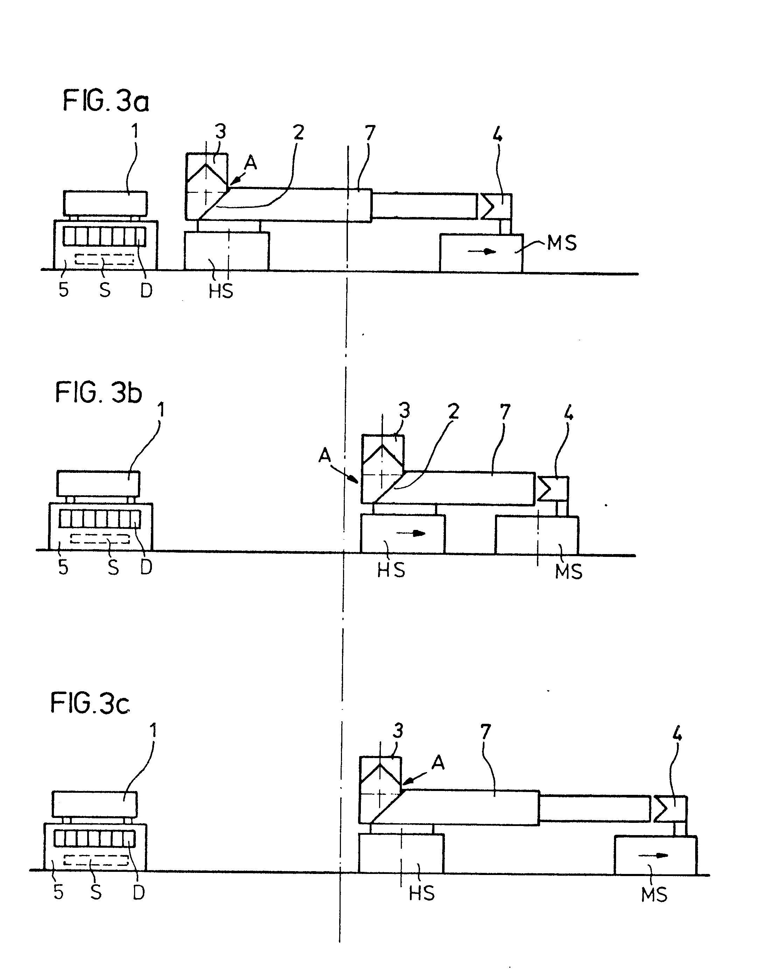

In den Fig. 3a bis 3c sind die Meßschritte zur Durchführung des erfindungsgemäßen Verfahrens erläutert. In bekannter Weise wird der Laser 1 stationiert. Die Meßbasis A wird zu Beginn der Messung fixiert und der Reflektor 4 auf dem Meßschlitten MS in die Anfangsposition gebracht. Im allgemeinen wird nun die Anzeige D des Zählers 5 auf den Wert »Null« gestellt und mit der Messung begonnen.

Bei Verschiebungen des Reflektors 4 zählt der Zähler 5 die Interferenzstreifendurchgänge, so daß deren Anzahl ein Maß für die Verschiebung des Reflektors 4 ist. Die maximale Distanz zwischen der Meßbasis A und dem Reflektor 4 wird durch die maximale Auszugslänge des Rohres 7 festgelegt und bestimmt die Endposition des Reflektors 4 bei jeder Teilmessung. Der Meßwert, d. h. die als Maß für die gemessene Strecke ermittelte Anzahl von Interferenzstreifendurchgängen wird im Zähler 5 gespeichert, der dazu mit einem Datenspeicher S versehen ist. Das Ergebnis der ersten Teilmessung liegt damit fest und ist abgespeichert.

Bei der zweiten Teilmessung wird vorerst der Meßschlitten MS des Reflektors 4 fixiert, der Hilfsschlitten HS mit der Meßbasis A wird gelöst und auf den Reflektor 4 hin verfahren. Dabei verkürzt sich das evakuierte Rohr 7 unter Einwirkung der Servo-Nachführeinrichtung 8 gemäß Fig. 2, die den Luftspalt zwischen dem Rohrende 10 und dem Reflektor 4 konstant klein hält. Die durch diese Verschiebung der Meßbasis A auftretenden Interferenzstreifendurchgänge werden mit negativem Vorzeichen gezählt, so daß bei Differenzbildung von dem im Datenspeicher S abgespeicherten Meßwert und der Restweganzeige die Distanz bekannt ist, um die die Meßbasis A verschoben wurde. Anschließend wird die Meßbasis A wieder fixiert und der Meßschlitten MS wieder gelöst. Dieser Vorgang kann beliebig oft wiederholt werden, ohne daß die Messung von den Umgebungsbedingungen der Atmosphäre beeinflußt wird. Da die Verschiebung der Meßbasis A von den gleichen Elementen gemessen wird, die die Verschiebung des Reflektors 4 messen, liegt die gleiche Genauigkeit vor, so daß die »Anschlußfehler« jeweils nur einen Schritt — entsprechend der Auflösung der Meßeinrichtung — betragen.

Die gesamte Meßstrecke läßt sich durch die Summe ausdrücken, die aus allen Verschiebestrecken der Meßbasis A und der letzten Teilmessung gebildet wird.

Mathematisch läßt sich dies einfach durch folgende Formel ausdrücken:

$$s = M + \sum_{n=0}^{i} R_n,$$

wobei s die Gesamtstrecke, M die letzte Teilmessung, $R_n$ die Nachführverschiebestrecken der Meßbasis aus den einzelnen Messungen und i die Anzahl der Teilmessungen ist.

Mit Hilfe des erfindungsgemäßen Verfahrens lassen sich auch andere geometrische Größen messen, wenn anstelle eines Interferometers andere bzw. abgewandelte Meßeinrichtungen in der erfindungsgemäßen Weise betrieben werden.

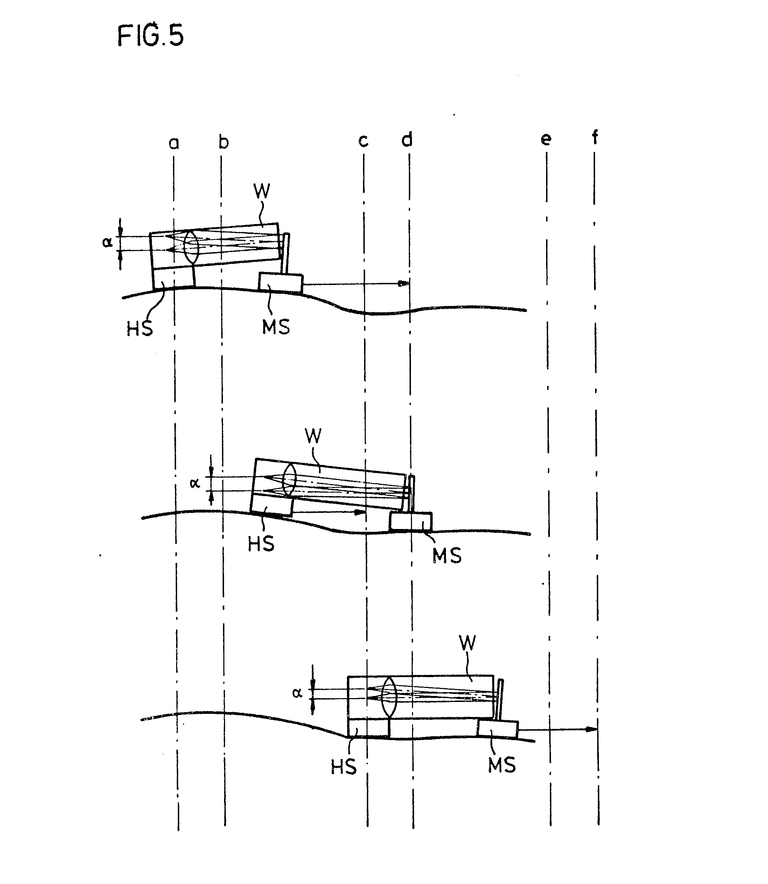

In Fig. 5 ist eine derartige Einrichtung zum Messen kleiner Winkel in Form einer Autokollimationseinrichtung W angegeben. Der jeweilige Meßwert $\alpha$ ist ein Maß für den Winkel, unter dem sich die optischen Achsen des Hilfsschlittens HS und des Meßschlittens MS schneiden. Der Meßvorgang selbst erfolgt in der gleichen Weise, wie zu Fig. 3a—3c angegeben ist.

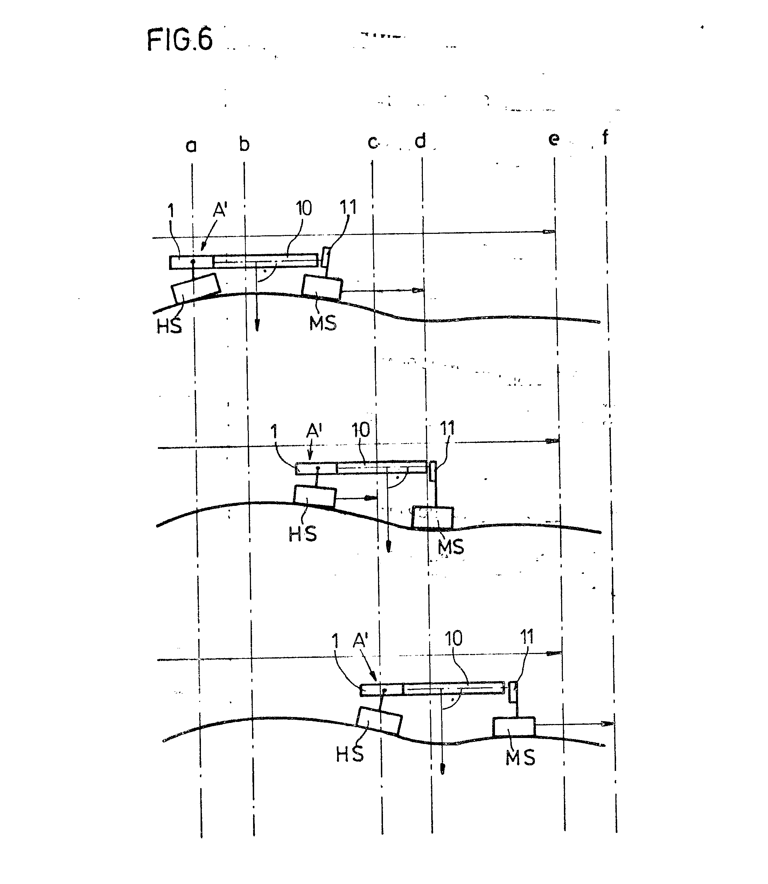

Eine weitere Möglichkeit besteht in der Messung von Ungeradheiten mit dem erfindungsgemäßen Verfahren. Dies ist schematisch in Fig. 6 gezeigt. Ein Lichtbündel 10 definiert die Bezugsgerade. Als Bezug für die Richtung des Lichtbündels 10 darf nicht die Richtung der zu messenden Oberfläche herangezogen werden, sondern es muß eine von ihr unabhängige Richtung, z. B. die Richtung der Schwerkraft herangezogen werden, was beispielsweise durch die Verwendung eines Pendels realisiert werden kann. Mit HS ist der Hilfsschlitten der Meßbasis A' bezeichnet und mit MS der Meßschlitten des Meßwertaufnehmers 11.

Beim ersten Meßschritt steht der Hilfsschlitten HS der Meßbasis A' erst auf dem Ausgangspunkt »a«, der Meßschlitten MS fährt von Punkt »b« nach Punkt »d«. Bei Ungeradheiten entlang des Weges des Meßschlittens MS verändert sich die Lage des Lichtbündels 10 auf dem Meßwertaufnehmer 11. Die so ermittelten Meßwerte sind die Lageabweichungen des Meßschlittens MS von dem Lichtbündel 10. Anschließend wird der Meßschlitten MS fixiert.

Beim zweiten Meßschritt fährt die Meßbasis A' auf dem Hilfsschlitten HS vom Punkt »a« nach Punkt »c«. Die Richtung des Lichtbündels 10 bleibt dabei trotz eventueller Ungeradheiten erhalten, da der Lichtsender 1 an einer nicht näher bezeichneten Pendelaufhängung angebracht ist. Es findet lediglich eine Parallelverschiebung des Lichtbündels 10 statt. Diese Parallelverschiebung wird durch den nun feststehenden Meßwertaufnehmer 11 gemessen. Hat der Hilfsschlitten HS mit der Meßbasis A' den Punkt »c« erreicht, wird er fixiert.

Wird nun für einen dritten Meßschritt wieder der Meßschlitten MS verfahren, so muß die Bezugspunktverschiebung aufgrund der Lageveränderung der Meßbasis A' bei der Messung berücksichtigt werden. Dies geschieht in analoger Weise, wie zu den Fig. 3a bis 3c bereits beschrieben wurde.

Auch bei den Meßverfahren gemäß Fig. 5 und 6 ist es vorteilhaft, die jeweilige Teilmeßstrecke in einem längenveränderlichen, evakuierten Rohr verlaufen zu lassen. Dies ist besonders vorteilhaft, wenn die zu Fig. 5 beschriebene Messung kleiner Winkel nicht mit einer Autokollimationseinrichtung, sondern mit einer Laserwinkelmeßeinrichtung vorgenommen wird, was durch bekannte Zusatzeinrichtungen zu einer Laser-Interferometermeßeinrichtung möglich ist.

Bei der Verwendung der beschriebenen Einrichtungen zum Messen von Längen, Winkeln und Ungeradheiten ist es besonders günstig, wenn das Meßverfahren von einem Digitalrechner automatisch gesteuert abläuft, wobei der Rechner auch die Meßlänge s ausrechnen und in der Anzeige D ausgeben kann. Der Digitalrechner kann als Mikroprozessor in dem Zähler 5 integriert sein.

**Patentansprüche**

1. Verfahren zum schrittweisen optischen Messen von geometrischen Größen wie Strekken, Winkeln und Ungeradheiten an einem zu vermessenden Objekt, vorzugsweise mit einem Laserinterferometer mit einer den Anfangspunkt der Messung festlegenden verschiebbaren Meßbasis (A, A'), einem mit dem verschiebbaren Meßobjekt verbundenen Meßwertgeber (4, 11) und einer Auswerteeinrichtung (5) zur Bildung des Meßwertes, dadurch gekennzeichnet, daß die Lageänderungen der Meßbasis (A, A') und des Meßwertgebers (4, 11) von der Auswerteeinrichtung (5) erfaßt werden und daß bei der Bildung des Gesamtmeßwertes die Lageänderungen der Meßbasis (A, A') bei den einzelnen Meßschritten berücksichtigt werden.

2. Laserinterferometermeßeinrichtung zur Durchführung des Verfahrens nach Anspruch 1, bei der der Strahlengang größtenteils in einem längenveränderlichen evakuierten Hohlraum (7), vorzugsweise einem Rohr verläuft, dadurch gekennzeichnet, daß die Meßbasis (A) von einem verschiebbaren Interferometermeßkopf und der Meßwertgeber (4) von einem verschiebbaren Reflektor gebildet werden, und daß eine Auswerteeinrichtung (5) zur Erfassung der Lageänderung von Meßbasis (A) und Meßwertgeber (4) vorgesehen ist.

3. Laserinterferometermeßeinrichtung nach Anspruch 2, dadurch gekennzeichnet, daß der Reflektor (4) außerhalb des evakuierten Rohres (7) angeordnet ist, und daß eine Servo-Nachführsteuerung (8) für das längenveränderliche Rohr (7) den Luftspalt zwischen dem einen Rohrende (10) und dem Reflektor (4) konstant klein hält.

4. Meßeinrichtung nach den Ansprüchen 2 und 3, dadurch gekennzeichnet, daß die Auswerteeinrichtung (5) einen Digitalrechner zur Meßwertbildung und zur Steuerung der Meßeinrichtung enthält.

5. Meßeinrichtung nach Anspruch 4, dadurch gekennzeichnet, daß der Digitalrechner ein Mikroprozessor ist.

6. Meßeinrichtung nach Anspruch 2 zur Messung von Ungeradheiten, dadurch gekennzeichnet, daß zur schrittweisen Messung von Ungeradheiten die Meßbasis (A') so ausgestaltet ist, daß die Richtung der Bezugsgeraden durch ein an sich bekanntes Pendel bestimmt wird.

7. Meßeinrichtung nach Anspruch 2 zur Messung von Ungeradheiten, dadurch gekennzeichnet, daß zur schrittweisen Messung von Ungeradheiten die Meßbasis (A') so ausgestaltet ist, daß die Richtung der Bezugsgeraden durch die Oberfläche einer Flüssigkeit bestimmt ist.

8. Meßeinrichtung nach Anspruch 2 zur Messung von Ungeradheiten, dadurch gekennzeichnet, daß zur schrittweisen Messung von Ungeradheiten die Meßbasis (A') so ausgestaltet ist, daß die Richtung der Bezugsgeraden durch einen Kreisel bestimmt ist.

**Claims**

1. Method for the stepwise optical measurement of geometrical parameters such as distances, angles and unevennesses on an object to be measured, preferably by means of a laser interferometer having a movable measurement base (A, A') which defines the starting point of the measurement, a measured value emitter (4, 11) connected to the movable measurement object and an evaluation device (5) for forming the measured value, characterised in that the position changes of the measurement base (A, A') and of the measured value emitter (4, 11) are sensed by the evaluation device (5) and that in forming the overall measured value the position changes of the measurement base (A, A') in the individual measurement steps are taken into account.

2. Laser interferometer measuring device for carrying out the method according to Claim 1, in which the beam path is for the greatest part located in an evacuated hollow space (7), preferably a tube, of adjustable length, characterised in that the measurement base (A) is formed by a movable interferometer measuring head and the measured value emitter (4) is formed by a movable reflector, and that an evaluation device (5) is provided for sensing the position change of the measurement base (A) and measured value emitter (4).

3. Laser interferometer measuring device according to Claim 2, characterised in that the reflector (4) is located outside the evacuated tube (7) and that a servo follow-up control (8) for the tube (7) of adjustable length keeps the air gap between one tube end (10) and the reflector (4) constantly small.

4. Measuring device according to Claims 2 and 3, characterised in that the evaluation device (5) contains a digital computer for forming the measured value and for controlling the measuring device.

5. Measuring device according to Claim 4, characterised in that the digital computer is a microprocessor.

6. Measuring device according to Claim 2 for measuring unevennesses, characterised in that, for the stepwise measurement of unevennesses, the measurement base (A') is so designed that the direction of the reference straight line is determined by a pendulum known per se.

7. Measuring device according to Claim 2 for measuring unevennesses, characterised in that, for the stepwise measurement of unevennesses, the measurement base (A') is so designed that the direction of the reference straight line is determined by the surface of a liquid.

8. Measuring device according to Claim 2 for measuring unevennesses, characterised in that, for the stepwise measurement of unevennesses, the measurement base (A') is so designed that the direction of the reference straight line is determined by a gyro.

**Revendications**

1. Procédé pour la mesure optique pas à pas de grandeurs géométriques telle que des distances, des angles et des défauts de rectilignité sur un objet à mesurer, de préférence avec un interféromètre à laser comportant une base de mesure déplaçable (A, A') définissant le point de départ de la mesure, un capteur de mesure (4, 11) raccordé à l'objet à mesurer déplaçable et un dispositif d'interprétation (5) pour former la valeur mesurée, caractérisé par le fait que les changements de position de la base de mesure (A, A') et du capteur de mesure (4, 11) sont déterminés par le dispositif d'interprétation (5) et que pour la formation de  ̣ valeur mesurée totale, on tient compte deṣ changements de position de la base de mesure (A, A') lors des différentes phases de la mesure.

2. Dispositif de mesure interférométrique à laser pour la mise en œuvre du procédé selon la revendication 1, dans lequel le trajet du rayon s'effectue en majeure partie dans une cavité sous vide (7) de longueur variable, de préférence un tube, caractérisé par le fait que la base de mesure (A) est formée par une tête de mesure d'interféromètre déplaçable et le capteur de mesure (4) par un réflecteur déplaçable et qu'un dispositif d'interprétation (5) est prévu pour déterminer le changement de position de la base de mesure (A) et du capteur de mesure (4).

3. Dispositif de mesure interférométrique à laser selon la revendication 2, caractérisé par le fait que le réflecteur (4) est disposé à l'extérieur du tube sous vide (7) et qu'une servocommande (8) pour le tube (7) de longueur variable maintient constamment petit l'entrefer compris entre une extrémité (10) du tube et le réflecteur (4).

4. Dispositif de mesure selon les revendications 2 et 3, caractérisé par le fait que le dispositif d'interprétation (5) contient un calculateur numérique pour la formation de la valeur mesurée et pour la commande du dispositif de mesure.

5. Dispositif de mesure selon la revendication 4, caractérisé par le fait que le calculateur numérique est un microprocesseur.

6. Dispositif de mesure selon la revendication 2 pour la mesure de défauts de rectilignité, caractérisé par le fait que pour la mesure pas à pas des défauts de rectilignité, la base de mesure (A') est réalisée de façon que la direction de la droite de référence soit déterminée par un pendule en soi connu.

7. Dispositif de mesure selon la revendication 2 pour la mesure de défauts de rectilignité, caractérisé par le fait que pour la mesure pas à pas des défauts de rectilignité, la base de mesure (A') est réalisée de façon que la direction de la droite de référence soit déterminée par la surface d'un liquide.

8. Dispositif de mesure selon la revendication 2 pour la mesure de défauts de rectilignité, caractérisé par le fait que pour la mesure pas à pas des défauts de rectilignité, la base de mesure (A') est réalisée de façon que la direction de la droite de référence soit déterminée par un gyroscope.

FIG.1

FIG.2

0 053 199

FIG. 3a

FIG. 3b

FIG. 3c

FIG.4

7

4

8

7a

4a

FIG.5

# FIG.6